# EUROPEAN PATENT APPLICATION

(11) **EP 4 847 938 A1**
(43) Date of publication of application: **02.12.2026**
(21) Application number: 25179385.7
(22) Date of filing: 28.05.2025
(51) Int. Cl.: G01S 1/16, G08G 5/22, G08G 5/26, G08G 5/54, H04B 7/185

(54) **A NAVIGATION AND COMMUNICATION (NAVCOM) SYSTEM FOR SERVICING AIRCRAFT ON APPROACH TO A PREDETERMINED LOCATION AND ASSOCIATED METHOD**

(71) Applicant: Airbus S.A.S., 31700 Blagnac (FR)
(72) Inventor: Meyerhoff, Thomas, 85521 Taufkirchen (DE)
(74) Representative: OTN Airbus SAS

(57) **Abstract**

In order to Nevco improve NavCom systems (10) for aircraft (28), preferably for the purposes of increasing resilience and/or increasing the number of aircraft (28) that can be serviced per system (10) the invention proposes a navigation and communication (NavCom) system (10) configured for servicing aircraft (28) on approach to a landing site (14), e.g., a runway. The system has at least one base station (18) on the ground, wherein each base station (18) has a first array antenna system (20) that transmits and receives RF signal beams (22). The base station (18) can establish a wireless communication link (38) with mobile equipment (26) installed on the aircraft (28) by means of RF signal beams (22, 32). The base station (18) and mobile equipment (26) cooperate to localize each aircraft (28) relative to the landing site (14) in 3D space based on angle of arrival (AoA) measurements or time of arrival (ToA) measurements of the received RF signal beams (22, 32).

## Description

The invention relates to a NavCom system. The invention further relates to an aircraft suitable for using the NavCom system and a method for operating the NavCom system.

Nowadays, global navigation satellite systems (GNSS) are widely employed for localization of vehicles of all kinds vehicles, while it is still maintained that traditional navigational techniques are learned as a backup or sanity check. However, the ever increasing urbanization and other factors were noticed to affect GNSS navigation so that increasing resilience is a common desire in this field.

EP 3 792 897 A1 discloses methods, systems, and non-transitory computer-readable medium for landing a vehicle. For instance, the method may include: before a descent transition point, receiving from a service a landing zone confirmation including landing zone location information and an indication that a landing zone is clear; determining a landing flight path based on the landing zone location information; and upon the vehicle starting a descent to the landing zone using the landing flight path: receiving landing zone data from at least one of a radar system, a camera system, an altitude and heading reference system (AHRS), and a GPS system; performing an analysis based on the landing zone data to determine whether an unsafe condition exists; and based on the analysis, computing flight controls for the vehicle to continue the descent or modify the descent.

It is the object of the invention to improve NavCom systems for aircraft, preferably for the purposes of increasing resilience and/or increasing the number of aircraft that can be serviced per system.

The object is achieved by the subject-matter of the independent claims. Preferred embodiments are subject-matter of the dependent claims.

The invention provides a navigation and communication (NavCom) system configured for servicing aircraft on approach to a landing site, e.g., a runway, the system comprising at least one radio equipment on the ground or installable on aircraft, wherein each radio equipment has an array antenna system configured for transmitting and receiving RF signal beams, and configured for establishing a wireless communication link with another radio equipment by means of the RF signal beams, wherein the radio equipment is further configured for allowing localizing each aircraft relative to the landing site based on at least an angle of arrival (AoA) and/or a time of arrival (ToA) of a received RF signal beam.

Systems that are typically employed in aviation, like the instrument landing system or GPS ground stations, are more or less bespoke solutions that may become more and more difficult to operate in the future. Among the reasons is their age (about 1950s for ILS) and the ever increasing number of devices and other factors that may interfere with the frequencies and signals. An idea is to embrace the technologies that are used for mobile terrestrial communication in mobile phones. The RF beams can be used to not only establish a communication link between the aircraft and the base station (BS), but also to track the approaching aircraft at the same time. Due to the directional antennas that are implemented as phased array antenna systems, interferers can be better avoided and, if they occur, can be better isolated and suppressed thereby improving the reliability of the whole system.

Preferably, at least one radio equipment is configured as a base station on the ground. Preferably, the base station comprises a first array antenna system that forms the array antenna system.

Preferably, at least one radio equipment is configured as a mobile equipment (ME) that is suitable to be installed on aircraft. Preferably, the mobile equipment comprises a second array antenna system that forms the array antenna system.

Preferably, the array antenna system and the radio equipment are cooperatively configured for beamforming such that an RF transmit beam is transmittable such that it tracks the aircraft or the airport or the landing site. With this approach the aircraft or the landing site can be tracked by the RF signal beam emanating from the radio equipment on approach to a landing site, for example.

Preferably, the system further comprises a location evaluation module that is configured to determine aircraft location data that indicate the location of each aircraft based on at least two received RF signal beams and/or at least one pair of transmitted and received RF signal beams. The variant involving two received RF signal beams is generally used with multiple base stations and a time difference of arrival (TDoA) approach. The TDoA can be obtained based on the ToA of each received RF signal beam. The variant involving a pair of transmitted and received signal beams is generally used in a situation with a single base station communicating with a single mobile equipment and involves round trip time (RTT) and AoA measurements.

Preferably, the aircraft location data indicate the 3D position of the aircraft.

Preferably, the transmitted RF signal beam(s) and/or the received RF signal beam(s) include one or more timing codes that are configured to enable determining the RTT between two pieces of radio equipment, e.g. base station and mobile equipment, based on ToA measurements. The timing code may be a positioning reference sequence (PRS), that is configured to enable localizing the respective aircraft. The PRS is used in the downlink, i.e., in the direction from a base station to mobile equipment. The timing code may be a sounding reference sequence (SRS), that is configured to enable localizing the respective aircraft. The SRS is used in the uplink, i.e., in the direction from the mobile equipment to the base station. The PRS and SRS are typically standardized, respectively. This idea is also known from the 5G mobile telecommunications networks standard and applied here for localizing aircraft.

Preferably, the location evaluation module is configured for forwarding the aircraft location data to the aircraft via the communication link and/or vice versa; and/or wherein the location evaluation module is configured for forwarding the aircraft location data to an air traffic management system and/or vice versa. The aircraft location data may be forwarded to other aircraft directly via the communication link. In other words, the aircraft location data can be transmitted to the base station which in turn forwards the aircraft location data further to other aircraft via their respective communication link.

Preferably, the system further comprises at least one radio equipment configured as a mobile equipment that is configured for being installed on the aircraft, wherein the mobile equipment has a second array antenna system that is configured for receiving a first RF signal beam from a radio equipment preferably configured as a base station, for transmitting a second RF signal beams preferably to a base station, and for communicating preferably with the base station via the wireless communication link. Preferably, the system comprises at least one aircraft, and the mobile equipment is installed thereon.

Preferably, the location evaluation module is part of each radio equipment, e.g., each base station and/or each mobile equipment. There can be more than one location evaluation module. It is possible for each component of the system, e.g., the base stations and mobile equipment, to have a location evaluation module of its own. It is preferred that each mobile equipment has one location evaluation module.

Preferably, at least one radio equipment is configured as a base station that is configured to cause the first array antenna system to transmit an RF illumination beam such that the RF illumination beam is intermittently directed at predetermined portions of the landing site, preferably at predetermined taxi portions of the landing site. The RF illumination beam can illuminate a predetermined portion of the landing site with the goal of detecting presence or absence of other aircraft at that location.

Preferably, at least one radio equipment is configured as a mobile equipment that is configured to cause the second array antenna system to beamform a second RF receive beam that is capable of receiving a reflection of the RF illumination beam originating from the predetermined portion. Preferably during approach, the second RF receive beam is formed so as to be able to detect any reflection coming from the direction of the landing site, specifically the predetermined portion. The mobile equipment or preferably the location evaluation module may then detect the reflection and evaluate based on the reflection, whether an object, e.g., another aircraft is present or not. It is also possible for the base station to transmit additional information to the respective mobile equipment in order to make it easier to identify the reflected beam in the noise background.

Preferably, the base station and/or the location evaluation module are configured for enabling the aircraft to automatically fly to and/or land at the landing site. With a more or less permanent feedback loop via the communication link, it is possible to remotely control the aircraft, e.g., via the base station, and guide the aircraft to land. For departure a similar remote control is possible.

Preferably, each radio equipment is configured to track at least one aircraft and/or landing site with the RF signal beam(s) transmitted from the radio equipment. Preferably, each mobile equipment is configured to track the at least one base station with the RF signal beam transmitted from the mobile equipment towards the base station.

Preferably, the wireless communication link provides a low latency communication with high throughput. Low latency communication typically has an average latency value below 10 ms. High throughput may be a network with average throughput of about 1 Gbits to 10 Gbits.

Preferably, the radio equipment comprises a location module that is configured to determine aircraft location data that indicates the location of each aircraft based on the angle of arrival and/or the time of arrival of the RF signal beam of the base station and/or the mobile equipment. Preferably, the location module is configured to determine the aircraft location data based on the angle of arrival that is determined based on at least beamforming an RF receive beam to receive the RF signal beam and/or the time of arrival that is determined based on at least transmitting an RF signal beam from the radio equipment to the aircraft or to the landing site and receiving the RF signal from the aircraft or from the landing site at the radio equipment, wherein each RF signal includes a timing code that is configured for enabling a distance location measurement. The location module can use the timing codes to measure a RTT between two pieces of radio equipment, e.g., a base station and a mobile equipment. The location module can then combine the distance estimate obtained from the RTT measurement with at least one angle of arrival measurement (elevation and azimuth) to obtain a 3D location of the aircraft relative to the landing site. The location module may use multiple angle of arrival measurements for determining the 3D location of each aircraft relative to the landing site. It is thus possible to use standard protocols of mobile telecommunication networks to determine aircraft location data. These standard protocols employ certain timing codes (e.g., PRS and SRS) that enable a reliable measurement of the round trip-time between base station and aircraft so as to determine the 3D location of a specific aircraft relative to the landing site.

It should be noted that determining the 3D location of the aircraft relative to the landing site can be accompanied by determining the 3D location of the aircraft within the global coordinate grid.

Preferably, the location evaluation module is configured for forwarding the aircraft location data from the aircraft via the communication link to the base station and/or vice versa, and/or for forwarding the aircraft location data from the base station to an air traffic management system and/or vice versa.

Preferably, the air traffic management system, the location evaluation module, and/or the aircraft are configured for controlling the aircraft to automatically fly to the landing site, and preferably to automatically land at the landing site. The aircraft may be landed automatically for example.

Preferably, the system further comprises at least one radio equipment that is configured as a mobile equipment that is installed on the aircraft, wherein the mobile equipment has a second array antenna system that is configured for transmitting the RF signal beam, and for communicating with the radio equipment, e.g. the base station, via the wireless communication link. Preferably, the mobile equipment includes the location module.

Preferably, the first array antenna system is configured for beamforming such that the RF illumination beam acts as a transmission beam that is intermittently directed at predetermined portions of the predetermined location, preferably at predetermined taxi portions of the landing site. With this configuration it is possible for the approaching aircraft to detect obstructions, such as runway incursions, and avoid collisions.

Preferably, the second array antenna system and the mobile equipment are cooperatively configured for beamforming such that the second RF beam acts as a receiver beam that is intermittently directed at the predetermined portion to receive a reflection of the RF illumination beam therefrom. With this configuration, the approaching aircraft can select the relevant sector to detect obstructions.

The invention provides a method for operating a NavCom system of any of the preceding claims, the method comprising, the radio equipment transmitting a first (RF) signal beam towards an aircraft and/or a landing site by means of the first array antenna system; the radio equipment beamforming an RF receive beam that is suitable to receive a second RF signal beam; the radio equipment attempting establishing a wireless communication link with the aircraft and/or the landing site by means of the first RF signal beam and the second RF receive beam, wherein, upon receiving the second RF signal beam, the radio equipment localizes the aircraft relative to the landing site based on at least an AoA and/or a ToA of the second RF signal beam.

The method further comprises, with a location evaluation module, determining aircraft location data that indicate the location of each aircraft based on at least two received RF signal beams and/or at least one pair of transmitted and received RF signal beams.

Preferably, the transmitted RF signal beam and/or the received RF signal beam(s) include one or more timing codes that are used in measurement of the RTT between two pieces of radio equipment, e.g. base station and mobile equipment. The timing code may include a positioning reference sequence or a sounding reference sequence, that is configured to enable localizing the respective aircraft.

Preferably, the location evaluation module forwards the aircraft location data to the aircraft via the communication link and/or vice versa; and/or the location evaluation module forwards the aircraft location data to an air traffic management system and/or vice versa.

The method further comprises, with at least one mobile equipment that has a second array antenna system, transmitting RF signal beams, and communicating with the base station via the wireless communication link.

Preferably, the base station causes the first array antenna system to transmit an RF illumination beam such that the RF illumination beam is intermittently directed at predetermined portions of the landing site, preferably at predetermined taxi portions of the landing site.

Preferably, the mobile equipment causes the second array antenna system to beamform a second RF receive beam that is capable of receiving a reflection of the RF illumination beam originating from the predetermined portion.

Preferably, the base station and/or the location evaluation module cause the aircraft to automatically fly to and/or land at the landing site.

Preferably, each base station tracks at least one aircraft with the RF signal beam transmitted from the base station.

The invention provides a computer program that includes instructions, that upon execution by a preferred system, cause the system to perform the preferred method.

The invention provides a radio equipment, preferably a mobile equipment, kit-of-parts that is suitable for a preferred system, the kit-of-parts comprising means perform the preferred method and/or comprising the preferred computer program.

The invention provides an aircraft, preferably a passenger aircraft, that is equipped with at least one preferred radio equipment, preferably mobile equipment, kit-of-parts that is assembled and installed on the aircraft in an operational manner. It should be noted that determining the 3D location of the aircraft relative to the landing site can be accompanied by determining the 3D location of the aircraft within the global coordinate grid.

To determine the 3D position of an aircraft, the base station and the mobile illumination equipment (UE) onboard the aircraft typically participate in a coordinated localization process. This process can be based on time of arrival (ToA) and angle of arrival (AoA) measurements of RF signals that are exchanged between the base station and the aircraft. These signals not only serve localization purposes but may also support ongoing communication between the aircraft and the ground infrastructure.

The measurement process is based on the array antenna systems, which are used on both the base station and the UE, i.e. the aircraft. These systems allow for precise AoA measurements, as they enable directional sensing and beamforming.

The mobile UE and/or the base station can perform AoA and ToA measurements. Based on the AoA and ToA, the location module can calculate the aircraft's 3D position. The location data can be forwarded to the base station or other aircraft. The position computation can take place at the base station or onboard the aircraft, depending on system configuration and latency requirements. It should be mentioned that determining the position onboard the aircraft is preferred.

ToA and AoA methods can benefit from an increased amount measurement data, from the base station and/or the aircraft, as this improves localization precision. With four or more base stations available, it is possible to perform time-difference of arrival (TDoA) measurements, enabling hyperbolic navigation based on ToA alone.

To support precise timing, the transmitted signal preferably includes known positioning reference sequences. The receiver, which knows these sequences, can calculate delays accurately, factoring in a predefined response delay to base station queries. Additionally, the known positions of the base stations provide critical reference points necessary for multilateration.

Beyond localization, the array antenna systems can also enhance the communication link itself. By concentrating signal energy and increasing or maximizing under the given circumstances the signal-to-noise ratio (SNR), these systems improve the overall link budget, enabling more reliable data transmission even under challenging conditions.

The next generation of mobile communication systems addresses communication and localization of aerial mobile equipment with focus on unmanned aerial vehicles (UAVs) and high-altitude platform stations (HAPS). Also air to ground communications between a terrestrial mobile communications network and aircraft is considered.

The 6th generation (6G) of mobile communication systems provides advanced methods that allow locating mobile equipment (UE) with high accuracy. In scenarios where global navigation satellite systems (GNSS) and legacy aeronautical navigation systems such as the instrumented landing system (ILS) may not be able to meet the ever increasing requirements of future aviation use cases. Thus, it is an idea to use this technology to augment or replace the legacy aeronautical navigation and communication systems such that these requirements can be met.

It is an idea of this invention to provide a navigation and communication (NavCom) system for aviation with particular focus on scenarios in which the system services aircraft on approach to an airport.

The system includes one or more dedicated base stations at the airport with directional antennas, such as phased array antennas (PAAs) or sector antennas. The UE installed onboard the aircraft can be connected to a directional antenna, that is installed externally on the aircraft fuselage.

The PAA are capable of tracking the aircraft or base station on the runway with its beam for establishing a communication link.

The system may operate in the frequency range from 6 GHz to 22 GHz. The communication link allows for a ultra-low latency (average latency < 10 ms, preferably < 1 ms) reliable communication with high throughput (average throughput 200 Mbit/s to 500 Mbit/s, peak about 10 Gbit/s).

The communication link is simultaneously used to localize the aircraft relative to the runway based on the localization features included in the positioning framework of the mobile communications network.

In some embodiments a private core network may be operated at the airport to provide ground communications.

It is possible to operate the radio link in a frequency range for which the airport owns a license for transmission.

In some embodiments a location evaluation device provides a location evaluation function, preferably in the private core network, that allows computing the aircraft locations based on the dedicated BS and UE measurements under consideration of applicable aeronautical standards and respective requirements.

In some embodiments the system forwards the positioning information to the aircraft system to support it safe landing, preferably using the established communication link.

In some embodiments the system forwards the positioning information to an aircraft traffic management system at the airport, preferably to coordinate the approach of multiple aircraft.

In some embodiments the system uses the radio links to determine a possible runway incursion to avoid collisions during landing.

In some embodiments the NavCom service is offered by the airport being equipped with one or more dedicated base stations whose directional antennas (e.g., sector antennas) can cover the approach corridor and runway approached by an aircraft. The base station can be connected to a private core network (e.g., 5G network) operated by the airport. The dedicated BS can be co-located with BS of public network operators, e.g. by sharing the same antenna mast. The sector antennas of the dedicated BS can be phased array antennas capable of tracking an aircraft in approach with their main lobes.

The serviced aircraft can each be equipped with a UE that is connected to e.g. a phased array antenna installed external on the aircraft fuselage. Preferably, its mechanical boresight points along the direction of flight.

The antennas onboard the aircraft and dedicated BS may be designed such that sufficient link budget for communication and positioning is provided by continuous alignment of the antenna beams throughout the approach trajectory. The distance for which this link budget needs to be established can for example be 20 km or more.

The high directivity of the aircraft and BS phased array antennas allows a significant attenuation to signals incident to the UE or BS antenna from directions other than the line of sight direction between BS and aircraft, e.g., to suppress interferers. The communication link allows for a high robustness against jamming or any other form of radio interference, thus enabling highly reliable communication and positioning measurements.

The carrier frequency of the communication system is preferably the frequency range between 6 GHz and 22GHz as this range typically provides favorable propagation conditions. Furthermore a channel bandwidth of up to 400 MHz can be supported. It is also possible to have compact antenna designs, which is preferred in view of aircraft installation.

The system can use the 5G NR positioning framework to perform ranging measurements, angle of arrival measurements, and angle of departure measurements, for example. The localization management function (LMF) of the private core network connected to the dedicated BS can use these measurements to determine the location of the aircraft relative to the BS positions and/or the runway targeted for landing. The LMF function may be developed in accordance with aeronautical requirements, e.g., related to safety of flight.

The high channel bandwidth supports ultra-low latency reliable and high throughput communications between the airport infrastructure and the aircraft supporting use cases such as remote piloting or data offloading.

In case several aircraft are in approach and serviced by same dedicated BS or set of dedicated BSs the communication and positioning can be multiplexed between the aircraft using for example a time domain multiple access (TDMA) scheme.

The system allows to provide a localization accuracy and communication performance that is superior to known comparable aeronautical systems.

Furthermore, the system can be built mostly from components that are commercially available off the shelf to a major extent instead of the legacy bespoke solutions. The system therefore enables lower cost and effort in building, operating and maintenance of the infrastructure.

Embodiments of the invention are described in more detail with reference to the accompanying schematic drawings that are listed below:
- Fig. 1: depicts an embodiment of a NavCom system;
- Fig. 2: depicts a side view of an aircraft approaching a landing site; and
- Fig. 3: depicts a schematic top view for detecting runway incursion.

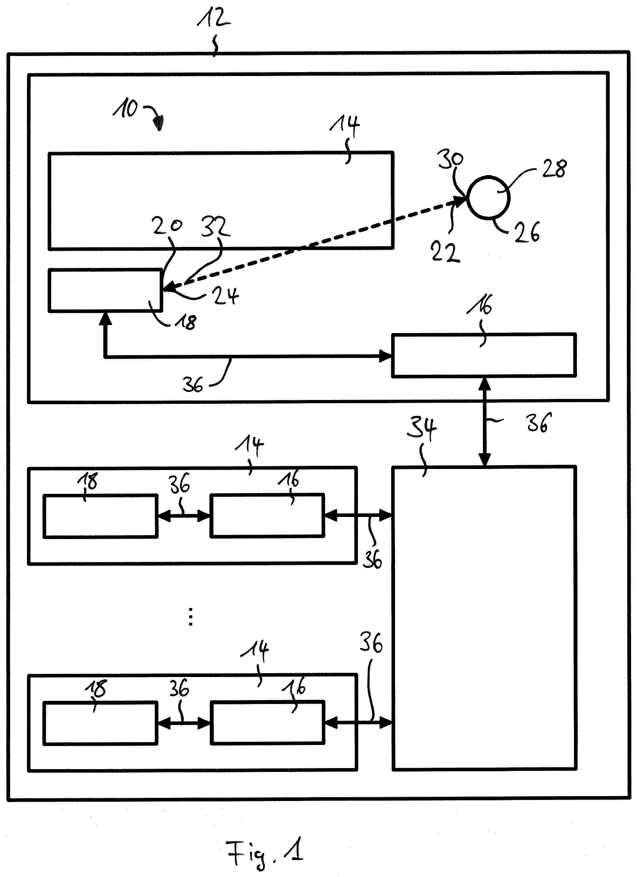

Referring to Fig. 1, a NavCom system 10 is depicted that is installed at an airport 12. The airport 12 includes at least one landing site 14 in the form of a runway, for example. It should be noted that other facilities than runways can be used as the landing site 14, for example, helipads or other vertical take-off and landing sites.

The system 10 includes at least one base station 18. The base station 18 is an example for radio equipment. Each base station 18 is associated with one landing site 14. The system 10 may include a plurality of base stations 18 for each landing site 14.

The base station 18 includes at least one first array antenna system 20. Each first array antenna system 20 is configured as a phased array antenna (PAA). The first array antenna system 20 can beamform RF beams 22 as transmit beams and/or receive beams. The first array antenna system 20 is able to form and transmit a first radio frequency (RF) signal beam 22 that is confined in a certain angle range. Furthermore, the first array antenna system 20 may be capable of forming a second RF beam 24 as a receive beam that allows receiving of a second RF signal beam 32 within a certain angle range around a main lobe direction.

The system 10 includes mobile, e.g. aerial, equipment 26 that is installed on an aircraft 28. The mobile equipment 26 is another example for radio equipment. The mobile equipment 26 includes one or more second array antenna systems 30. The second array antenna system 30 is configured for beamforming and transmitting a second RF signal beam 32. The second array antenna system 30 is preferably also a PAA.

The system 10 may include at least one location evaluation module 33 that is configured to take input data from the first and/or second antenna array system 20, 30 to generate aircraft location data that indicate the 3D location of the aircraft 28 relative to the landing site 14. The input data typically include angle of arrival (AoA) and/or time of arrival (ToA) data. Each location evaluation module 33 is preferably part of one base station 18 or one mobile equipment 26.

The system 10 includes a, preferably wireless, private core network 36 that connects the different components at the site of the airport 12. The private core network 36 is preferably based on a regular mobile communication network, such as 5G and 6G networks.

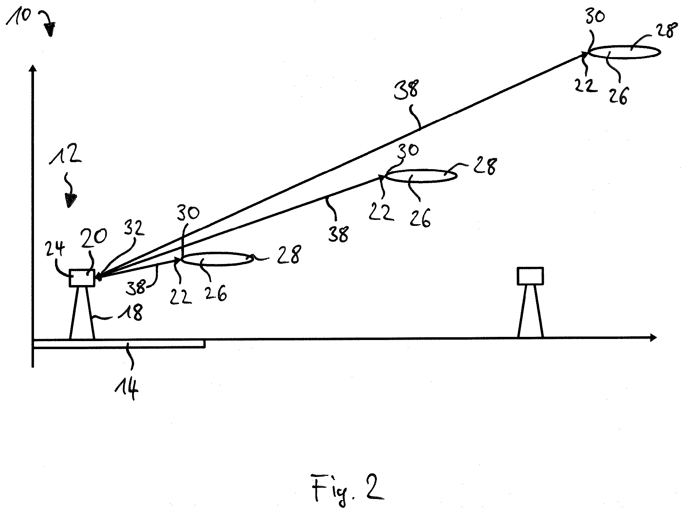

Referring to Fig. 2 an operation of the system 10 during approach of multiple aircraft 28 is described in more detail. As soon as the aircraft 28 enters the approach corridor 37 towards the landing site 14, the base station 18 may transmit the first RF signal beam 22 pointing towards the approaching aircraft 28 along the approach corridor 37. The mobile equipment 26 installed on the aircraft 28 may receive the first RF signal beam 22 and can send out the second RF signal beam 32 in response. Both the first and second RF signal beams 22, 32 may include timing codes to allow ToA measurements.

The base station 18 can receive the second RF signal beam 32. Upon receiving said beam, the base station 18 may establish a communication link 38 with the aircraft 28.

The location evaluation module 33 may determine aircraft location data that indicate the current 3D location of the approaching aircraft 28 based on AoA and/or ToA data. In determining the aircraft location data, the location evaluation module 33 may use the communication link 38. The location evaluation module 33 may perform the location evaluation function using a typical localization framework that is known per se in the field of mobile communication networks.

Similar to the previous description, the system 10 can establish the communication links 38 with each aircraft 28 that approach the landing site 14. As shown in Fig. 2, the multiple aircraft 28 can be separated by a predetermined distance of about 2.5 nm to 8 nm. Each aircraft 28 can establish a communication link 38 with the base station 18 and can be tracked separately.

The location evaluation module 33 may determine the aircraft location data for each aircraft 28 and can forward these data to preferably each aircraft 28 and optionally to an air traffic management system 34, specifically the aircraft 28 within the approach corridor 37. Thus, the approaching aircraft 28 can be aware of any other aircraft 28 in the approach corridor 37 and a violation of minimum separation can be easier avoided.

Furthermore, it is possible that the system 10 uses the aircraft location data to automatically land the approaching aircraft 28 at the landing site 14. If for some reason, an interference were to occur, the system 10, specifically the base station 18 and/or the mobile equipment 26 can detect that interferer and use the beamforming capability of the first array antenna system 20 to compensate. It is also possible that the base station 18 sends interferer data that indicate the properties of the interferer to the mobile equipment 26, which in response may also performs beamforming to compensate for the interferer.

The operation as previously described can be more resilient against interferers and may improve the amount of data, specifically flight data, that can be exchanged during approach between the aircraft 28 and the base station 18. Furthermore, due to tracking of the aircraft 28 by the first RF signal beam 22 and the second RF signal beam 32, it is possible to have curved approach corridors 37. With this it is possible to define a greater variety of approach corridors, which can then be changed depending on the time of day, for example. Thus, the NavCom system 10 may also contribute to reducing flight noise in urban areas.

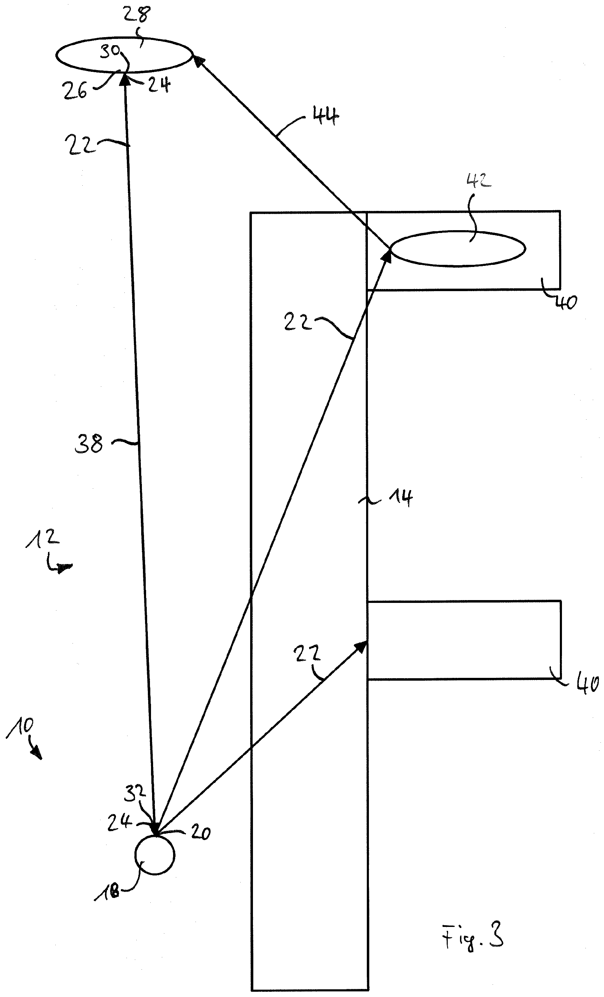

Referring to Fig. 3 another operation of the NavCom system 10 which helps to avoid runway incursions is described in more detail. For sake of brevity, it is assumed that there is already an established communication link 38 between the base station 18 and the aircraft 28.

As depicted in Fig. 3, the landing site 14 is configured as a runway that is connected to multiple taxi portions 40. The taxi portions 40 allow aircraft 28 on the ground to move from their parking spot to the runway for take-off, for example.

The base station 18 using the first array antenna system 20 may point the first RF signal beam 22 intermittently and possibly in a predetermined sequence towards each taxi portion 40, specifically at the transition between the taxi portion 40 and the landing site 14. The first RF signal beam 22 can then be designated as RF illumination beam. The RF illumination beam 22 can be pointed using beamforming and may send out a predetermined identification signal to be able to distinguish several RF illumination beams 22 that can be sent out as probes from those sent out for establishing the communication link 38, for example.

The base station 18 may also send the necessary data about the RF illumination beam 22 for probing via the communication link 38 to the approaching aircraft 28. In response, the mobile equipment 26 can beamform the second RF beam 24 such that it can receive signals from the direction of the landing site 14 and looks for the identification signal or portions of it.

If the RF illumination beam 22 is pointed at the lower taxi portion 40 and there is no occupying aircraft the RF illumination beam 22 gets scattered in a manner that the approaching aircraft 28 receives no signal.

If the RF illumination beam 22 is pointed at the upper taxi portion 40, where there is an occupying aircraft 42, the RF illumination beam 22 gets reflected and a portion of the reflected RF beam 44 is directed at the approaching aircraft 28. As the approaching aircraft 28 was informed via the communication link 38 where the RF illumination beam 22 is pointing, the mobile equipment 26 is able to pick-up and receive the reflected RF beam 42. In response to receiving the reflected RF beam 42 the mobile equipment 26 may determine that there is a runway obstruction and issue a warning to the pilot of the approaching aircraft 28. It is also possible to change the approach speed of the aircraft 28.

### List of reference signs:

- 10: NavCom system
- 12: airport
- 14: landing site (predetermined location)

- 18: base station (radio equipment)
- 20: first array antenna system (array antenna system)
- 22: first radio frequency (RF) signal beam (RF illumination beam)
- 24: second RF beam
- 26: mobile equipment (radio equipment)
- 28: aircraft
- 30: second array antenna system (array antenna system)
- 32: second RF signal beam
- 33: location evaluation module
- 34: air traffic management system
- 36: private core network
- 37: approach corridor
- 38: communication link
- 40: taxi portion
- 42: occupying aircraft
- 44: reflected RF beam

## Claims

1. A navigation and communication (NavCom) system (10) configured for servicing aircraft (28) on approach to a landing site (14), e.g. a runway, the system comprising at least one radio equipment (18, 26) on the ground or installable on aircraft (28), wherein each radio equipment (18, 26) has an array antenna system (20, 30) configured for transmitting and receiving RF signal beams (22, 32), and configured for establishing a wireless communication link (38) with another radio equipment (26, 18) by means of the RF signal beams (22, 32), wherein the radio equipment (18, 26) is further configured for allowing localizing each aircraft (28) relative to the landing site (14) based on at least an angle of arrival (AoA) and/or a time of arrival (ToA) of a received RF signal beam.

2. The system (10) of claim 1, further comprising a location evaluation module that is configured to determine aircraft location data that indicate the location of each aircraft based on at least two received RF signal beams (22) and/or at least one pair of transmitted and received RF signal beams (22, 32).

3. The system (10) of claim 2, wherein the transmitted RF signal beam(s) (22, 32) and/or the received RF signal beam(s) (22, 32) include one or more timing code(s) that are configured to enable a measurement of the round-trip time (RTT) between two pieces of radio equipment (18, 26).

4. The system of claim 2 or 3, wherein the location evaluation module (33) is configured for forwarding the aircraft location data to the aircraft (28) via the communication link (38) and/or vice versa; and/or wherein the location evaluation module (33) is configured for forwarding the aircraft location data to an air traffic management system (34) and/or vice versa.

5. The system (10) of any of the preceding claims, further comprising at least one radio equipment configured as a mobile equipment (26) that is configured for being installed on the aircraft (28), wherein the mobile equipment (26) has a second array antenna system that is configured for receiving a first RF signal beam (22) from a radio equipment configured as a base station (18), for transmitting a second RF signal beam (32) to the base station (18), and for communicating with the base station (18) via the wireless communication link (38).

6. The system (10) of any of the claims 2 to 5, wherein the location evaluation module (33) is part of each radio equipment, wherein each radio equipment is configured as a base station (18) or a mobile equipment (26).

7. The system (10) of any of the claims 2 to 6, wherein at least one radio equipment is configured as a base station (18) that is configured to cause the first array antenna system (20) to transmit an RF illumination beam (22) such that the RF illumination beam (22) is intermittently directed at predetermined portions of the landing site (14), preferably at predetermined taxi portions of the landing site (14).

8. The system (10) of claim 7, wherein at least one radio equipment is configured as a mobile equipment (26) that is configured to cause the second array antenna system to beamform a second RF receive beam (32) that is capable of receiving a reflection of the RF illumination beam (22) originating from the predetermined portion.

9. The system (10) of any of the preceding claims, wherein the base station and/or the location evaluation module are configured for enabling the aircraft to automatically fly to and/or land at the landing site.

10. The system of any of the preceding claims, wherein each radio equipment (18, 26) is configured to track at least one aircraft (28) and/or landing site (14) with the RF signal beam(s) (22, 32) transmitted from the radio equipment (18, 26).

11. The system (10) of any of the preceding claims, wherein the wireless communication link (38) provides a low latency communication with high throughput.

12. A method for operating a NavCom system (10) of any of the preceding claims, the method comprising, the radio equipment (18, 26) transmitting a (RF) signal beam (22, 32) towards another radio equipment (26, 18) by means of the array antenna system (20, 30); the radio equipment (18, 26) beamforming an RF receive beam (22) that is suitable to receive at least one second RF signal beam (32); the radio equipment (18, 26) attempting establishing a wireless communication link (38) with the other radio equipment (26, 18) by means of the first RF signal beam (22) and the second RF receive beam (32), wherein, upon receiving the second RF signal beam (32), the radio equipment (18, 26) localizes the other radio equipment relative to the radio equipment based on at least an AoA and/or a ToA of the second RF signal beam (32).

13. A computer program that includes instructions, that upon execution by a system (10) of any of the claims 1 to 11, cause the system (10) to perform the method of claim 12.

14. A radio equipment (18, 26) kit-of-parts that is suitable for a system (10) of any of the claims 1 to 11, the kit-of-parts comprising means to perform the method of claim 12 and/or comprising the computer program of claim 13.

15. An aircraft (28), preferably a passenger aircraft, that is equipped with at least one radio equipment (18, 26) kit-of-parts that is assembled and installed on the aircraft (28) in an operational manner.
